# FASCICULE DE BREVET EUROPEEN

(11) **EP 3 721 616 B1**
(45) Date de publication et mention de la délivrance du brevet: **29.09.2021**
(21) Numéro de dépôt: 18811299.9
(22) Date de dépôt: 06.12.2018
(51) Int. Cl.: H04N 5/347, H04N 5/355, H04N 5/374, H04N 5/3745, H04N 5/235, H04N 5/378

(54) **CAPTEUR D'IMAGE HAUTE DYNAMIQUE**
BILDSENSOR MIT HOHEM DYNAMIKBEREICH
HIGH DYNAMIC RANGE IMAGE SENSOR

(30) Priorité: 07.12.2017 FR 1701285
(43) Date de publication de la demande: 14.10.2020
(73) Titulaire: Teledyne e2v Semiconductors SAS, 38120 Saint-Egrève (FR)
(72) Inventeur: DIASPARRA, Bruno, 38180 Seyssins (FR); RICHARD, Vincent, 38330 Saint Ismier (FR)
(74) Mandataire: K&L Gates LLP
(86) Numéro de dépôt international: PCT/EP2018/083762
(87) Numéro de publication internationale: WO 2019/110718

(56) Documents cités:
- US-A1- 2009 135 263
- US-A1- 2013 057 743
- US-A1- 2014 092 285
- US-A1- 2015 312 461
- US-A1- 2017 084 649

## Description

### DOMAINE TECHNIQUE

La présente invention concerne les capteurs d'image à pixels actifs (structure de pixel à élément photosensible et transistors de commande) qui permettent de fournir une image avec une grande dynamique en sortie, ce qui est particulièrement souhaitable lorsque la scène dont on veut faire une image est très contrastée.

### ETAT DE LA TECHNIQUE

La dynamique d'un capteur d'image traduit sa capacité à capturer simultanément dans la même image un signal non saturé dans des zones très éclairées et un signal significatif (supérieur au bruit) dans des zones peu éclairées. Cette dynamique dépend intrinsèquement de la structure des pixels (schéma électrique et technologie) et des propriétés des circuits de lecture des pixels (gain, bruit de lecture, profondeur de sortie du convertisseur) du capteur considéré. Dans des conditions d'exposition d'une scène très contrastées, les limites intrinsèques de dynamique du capteur se traduisent par de la perte d'information : si la durée d'exposition est courte, on ne sature pas vite, mais dans les zones sombres, le signal est trop faible devant le bruit de la chaine de lecture du capteur. Si la durée d'exposition est longue, on va saturer le pixel dans les zones très éclairées. Cette perte d'information est critique pour certaines applications, telles que les applications de vision industrielle, de trafic intelligent (ITS) ou d'inspection électronique pour n'en citer que quelques unes.

Pour répondre à ce besoin, en parallèle des recherches sur la technologie et les structures, des techniques d'imagerie dites "HDR" (pour "*High Dynamic Range*") ont été proposées pour étendre la dynamique des capteurs (CCD aussi bien que CMOS). Il s'agissait de prendre au moins deux images d'une scène, successivement, chacune avec une durée d'exposition des pixels différente, puis de combiner ces deux images en une seule, en appliquant des algorithmes de reconstruction d'image permettant d'obtenir une image de sortie contenant tous les détails de la scène à la fois dans des zones très exposées à la lumière et dans des zones au contraire très peu exposées.

Mais les images HDR de sortie obtenues peuvent contenir des artefacts (déformations, flou) du fait que les images combinées pour produire l'image HDR de sortie n'ont pas été prises en même temps. On peut donc avoir un effet de bougé qui détériore le rendu d'image et donc son exploitation par l'application concernée. Mais surtout, cette technique dégrade beaucoup la cadence d'images ou "*frame rate*" (nombre d'images/s) en sortie du capteur, et nécessite d'intégrer une grande capacité mémoire dans le capteur, puisqu'il faut acquérir et mémoriser au moins deux images successives pour reconstruire et fournir une image HDR en sortie.

Pour résoudre ces problèmes de temps de réponse et de mémoire, on a proposé d'appliquer des techniques d'entrelacement et d'interpolation de façon à obtenir au cours de la même prise d'image, des informations correspondant à (au moins) deux durées d'exposition différentes, en utilisant les possibilités de commande et d'adressage des pixels actifs (capteurs CMOS). Si on prend l'exemple de deux durées d'exposition différentes, le principe est le suivant : on effectue une seule prise d'image, en appliquant la première durée d'exposition sur des lignes et la deuxième durée d'exposition sur d'autres lignes de la matrice, de façon entrelacée ou alternée. Cette distribution entrelacée des durées d'exposition sur les lignes de la matrice permet un traitement par interpolation, dans le but d'obtenir deux informations par pixel correspondant aux deux durées d'exposition, l'une correspondant à la valeur lue et qui correspond à la durée d'exposition du pixel, et l'autre à une valeur interpolée à partir des valeurs lues de pixels de lignes voisines exposées à l'autre durée d'exposition. C'est ce qui permet ensuite de reconstruire des données HDR en retenant la meilleure information pour chaque pixel (valeur lue ou valeur interpolée) avec mise à l'échelle le cas échéant. Par exemple si on se cale sur la durée d'exposition plus courte, les valeurs lues ou interpolées correspondant à la durée d'exposition plus longue seront divisées par le rapport de la durée plus longue sur la durée plus courte ("rescaling"). Au final on perd un peu en résolution du fait de l'interpolation, mais on gagne en cadence d'images. Par exemple, le brevet US 8,405,750 (Smith et al) décrit une technique d'imagerie HDR pour capteur CMOS basée sur ce principe, et qui est adaptée à un mode de capture d'image instantanée (obturateur global) qui de fait réduit les artefacts dus au phénomène de bougé : dans la phase d'intégration commune, les pixels intègrent tous en même temps, mais plus ou moins longtemps, selon la ligne sur laquelle ils se trouvent ; puis, dans la phase de lecture, les lignes sont lues une à une, successivement. La production de chaque ligne d'image HDR de sortie se fait à partir des données de quelques lignes seulement d'une seule prise d'image, réduisant la capacité mémoire permettant de mener les calculs d'interpolation, à quelques lignes de la matrice (par rapport à une technique nécessitant de mémoriser deux images complètes). Le brevet envisage différents scénarios de commande des lignes des pixels pour obtenir l'entrelacement des différents temps d'exposition sur les lignes, en utilisant la commande d'initialisation des pixels et/ou la commande de transfert des charges intégrées par le pixel vers un nœud de lecture du pixel. Cette technique d'imagerie HDR adaptée à un mode de capture instantanée est ainsi plus rapide, plus économe en capacité mémoire et elle a un meilleur rendu en termes d'artefact.

La demande US 2009/0059048, propose un axe supplémentaire d'amélioration du temps de réponse, en réduisant le nombre de lignes de l'image de sortie : les données brutes de N lignes de pixels successives couvrant N durées d'exposition différentes sont combinées pour former les données "HDR" d'une (1) rangée de pixels de l'image finale. L'image HDR obtenue est N fois moins résolue verticalement (résolution spatiale) que l'image prise par le capteur qui a la taille de la matrice de pixels (de l'imageur).

Par ailleurs, comme les applications de vision recherchent le meilleur rapport signal sur bruit, il est préférable de pouvoir effectuer une lecture des pixels, par la technique dite CDS bien connue (double échantillonnage corrélé) qui permet de supprimer le bruit de lecture aléatoire en soustrayant le niveau de zéro du nœud de lecture au niveau de signal. On sait bien que cette technique de lecture CDS est applicable directement aux structures de pixels CMOS, lorsque la capture d'image est à obturateur électronique glissant (rolling shutter). Mais alors on retrouve des possibles artefacts d'image en cas de mouvement. La technique de capture instantanée, à obturateur électronique global (global shutter) permet d'éviter ces artefacts. En contrepartie, elle nécessite une structure de pixel plus complexe, avec un nœud mémoire en plus du nœud de lecture, si on veut pouvoir faire la lecture moins bruitée, CDS. On perd alors en compacité et en taux d'ouverture des pixels.

Enfin, s'agissant de la gestion de couleur, les technologies d'imagerie HDR décrites sont compatibles avec les divers formats de réseau de filtres colorés intégrés dans les capteurs d'image couleur et les brevets précités US2009/0059048 et US 8,405,750 expliquent cela en détail. Mais les besoins en capacité mémoire sont accrus, car le calcul d'interpolation pour un pixel donné doit tenir compte de la répartition des couleurs de filtres sur la matrice de pixels pour permettre la construction d'une information HDR en cohérence avec la couleur du pixel traité. Si on prend l'exemple d'un réseau de filtres colorés déposé sur la matrice de pixels et comprenant la répétition périodique d'un motif de quatre filtres colorés couvrant un pavé de 2x2 pixels (filtre de Bayer, mais aussi filtre CYGM, RGBE, RGBW, etc., _ notation anglo-saxonne), et d'une alternance de deux durées d'exposition (courte, longue) toutes les deux lignes : les données brutes d'au moins cinq lignes de pixels successives sont alors nécessaires (à mémoriser donc), pour reconstruire (par interpolation ou recombinaison) pour chaque pixel de sortie, l'information HDR dans la couleur qui va bien.

US20130057743A1 concerne un dispositif d'imagerie à semi-conducteurs. Le dispositif comprend une unité de pixels dans laquelle une pluralité de pixels sont agencés selon un motif matriciel. Le dispositif comprend aussi une unité de lecture de signal de pixel comprenant une unité de conversion AD effectuant une conversion AD d'un signal de pixel lu à partir de l'unité de pixel. Chaque pixel inclus dans l'unité de pixel comprend des pixels de division divisés en régions dans lesquelles des niveaux de photosensibilité ou des quantités d'accumulation de charge électrique sont différents les uns des autres. L'unité de lecture de signal de pixel comprend un mode de lecture normal et un mode de lecture multiple. L'unité de conversion AD acquiert un signal de pixel d'un pixel en ajoutant les signaux de pixels de division lus conformément avec le mode de lecture tout en effectuant la conversion AD pour les signaux de pixels de division.

### PROBLEME TECHNIQUE

Le marché des applications de vision industrielle (tri et inspection sur une chaîne de production) recherche des systèmes de vision compacts, offrant à la fois une bonne résolution, avec une grande dynamique de mesure, avec un temps de réponse rapide et peu ou pas d'artefacts, car cela contribue à réduire l'ensemble des coûts de production.

Les techniques d'imagerie HDR de l'état de l'art ne permettent pas de bien répondre à ces besoins. On a vu notamment qu'elles nécessitent une trop grande capacité mémoire, de plusieurs lignes d'image, pour le calcul d'interpolation, ce qui ne va pas avec la compacité demandée.

En outre, comme il est souhaitable de réduire au maximum les problèmes d'artefact dus à un problème de bougé, on voudrait pouvoir utiliser un mode de capture instantanée. Mais comme il est tout aussi souhaitable d'utiliser la technique de lecture CDS pour réduire la part de bruit, alors la structure des pixels n'est pas favorable en termes de taille et de taux d'ouverture. Des structures de pixels à éléments partagés permettent d'améliorer ces deux aspects, mais cela rend plus complexe la gestion des signaux de séquencement pour obtenir une image HDR selon les techniques de l'état de l'art. La gestion de la couleur ajoute une complexité supplémentaire à tous ces différents aspects.

### RESUME DE L'INVENTION

Un objet de l'invention est un capteur CMOS à reconstruction haute dynamique intégrée à moindre coût (complexité, taille), à cadence d'images optimisée, et également adapté à la prise d'image couleur.

La solution à la base de l'invention résulte d'un travail de recherche d'optimisation à la fois de la structure de pixel et des séquences de commande des pixels pour concilier les différentes contraintes, en combinant des structures de pixels partagés avec des agencements des signaux de commande associés, permettant une utilisation astucieuse du fonctionnement du circuit de lecture, séquencé par ligne de pixels, avec une voie de lecture par colonne, pour mettre en œuvre une interpolation et reconstruction HDR horizontales, par ligne, permettant d'éviter les mémoires de ligne de l'état de l'art. La structure de pixels et l'agencement des signaux selon l'invention permettent de piloter les signaux de commande des pixels et le circuit de lecture pour réaliser une prise d'image à obturateur global à deux durées d'exposition, une sur les colonnes paires et l'autre sur les colonnes impaires, et une lecture et exploitation des données pour reconstruire des valeurs hautes dynamiques en ligne, à la cadence du décodeur d'adresse colonne qui pilote le circuit de lecture. On obtient un capteur très compact, avec un mode haute dynamique performant, avec notamment un meilleur rapport signal sur bruit des données de sortie à la faveur d'un groupement de pixels par paires verticales pendant la phase de lecture, réalisant une sommation analogique de charges dans le nœud de lecture partagé et une cadence d'images en sortie améliorée dans un rapport deux, à la faveur de la lecture d'une ligne sur deux, correspondant à la lecture des nœuds de lecture partagés dans chaque paire de lignes.

Cette reconstruction HDR avec groupement de pixels par paire verticale se combine très avantageusement avec une capture de la couleur, au moyen d'un réseau de filtres colorés comprenant un filtre coloré par pixel de la matrice, avec une même couleur de filtre par pavé de 2x2 pixels, formant deux paires de pixels verticales alignés, les pixels de l'une intégrant pendant la durée d'exposition des colonnes paires et les pixels de l'autre, pendant la durée d'exposition des colonnes impaires. On bénéficie du temps de transfert amélioré dans le rapport 2, du meilleur rapport signal à bruit (sommation analogique dans chaque paire), sans altération du champ de vision du capteur (la surface réelle imagée ne varie pas).

On améliore le taux de transmission, en prévoyant dans chaque paire de lignes, un regroupement horizontal supplémentaire, par paires de pixels verticales de même couleur, deux à deux, établissant une valeur haute dynamique de sortie, par addition numérique, pour chaque pavé de pixels représentant deux paires de pixels verticales successives. On se retrouve alors avec un quadruplet d'informations couleurs conventionnel, type Bayer, facilement traité et à moindre coût (mémoire, temps de traitement) par les algorithmes de traitement de la couleur de l'état de l'art.

L'invention concerne donc un capteur d'image à pixels actifs comportant une matrice de pixels arrangés en lignes et colonnes, où les lignes définissent un alignement horizontal de pixels et les colonnes, un alignement vertical de pixels ; un circuit de lecture comportant une voie de lecture distincte par colonne de pixels et configuré pour établir par conversion analogique numérique, une valeur numérique représentative de la quantité de charges intégrées par un pixel pendant une durée d'exposition du pixel, et fournir en sortie successivement lesdites valeurs numériques établies dans chaque voie de lecture pour chaque ligne de la matrice ; un bloc de traitement numérique configuré pour appliquer des traitements numériques auxdites valeurs numériques fournies en sortie par le circuit de lecture. Chaque pixel sur une ligne et une colonne respectives de la matrice comprend une photodiode, un nœud mémoire et un nœud de lecture, et :
- un premier transistor de réinitialisation configuré pour réinitialiser sélectivement la photodiode,
- un deuxième transistor de réinitialisation configuré pour réinitialiser sélectivement le nœud de lecture,
- un premier transistor de transfert pour autoriser sélectivement le transfert des charges électriques intégrées par la photodiode, dans le nœud mémoire
- un deuxième transistor de transfert pour autoriser sélectivement le transfert des charges stockées dans le nœud mémoire, dans le nœud de lecture,
- un transistor monté en suiveur de tension et configuré pour appliquer sélectivement la tension aux bornes du nœud de lecture sur la voie de lecture de la colonne du pixel, lorsque la ligne du pixel est sélectionnée en lecture.

Le capteur est tel que dans chaque colonne de pixels, le nœud de lecture, le transistor de réinitialisation du nœud de lecture et le transistor monté en suiveur de tension sont partagés verticalement par au moins deux pixels successifs dans la colonne ; les premier et deuxième transistors de réinitialisation et le deuxième transistor de transfert sont chacun pilotés par un signal respectif de commande commun à tous les pixels d'une même ligne et le premier transistor de transfert est piloté par un signal de commande commun à tous les pixels d'une même colonne de pixels. Et le capteur comprend également un contrôleur configuré pour piloter les transistors des pixels, le circuit de lecture et le bloc de traitement numérique pour commander une prise d'image à obturation globale en mode haute dynamique comportant :
- une phase d'intégration à obturation globale comprenant
   - une exposition globale des pixels des colonnes impaires pendant une première durée d'intégration qui débute après une réinitialisation globale des photodiodes de la matrice, et qui se termine simultanément pour tous les pixels des colonnes impaires, avec un premier transfert global de charges des photodiodes vers le nœud mémoire desdits pixels ; et
   - une exposition globale des pixels des colonnes paires pendant une deuxième durée d'intégration différente de la première, qui débute après une réinitialisation globale des photodiodes de la matrice, et qui se termine simultanément pour tous les pixels des colonnes paires, avec un premier transfert global de charges de la photodiode vers le nœud mémoire desdits pixels, et puis
- une phase de lecture séquentielle, par paire de lignes, les pixels d'une paire de lignes situés sur une même colonne formant deux à deux une paire de pixels verticale à nœud de lecture partagé et ladite phase de lecture est telle qu'une séquence de lecture d'une paire de lignes comprend pour chaque paire de pixels verticale, les étapes de :
   - établir une première valeur numérique par le circuit de lecture (2), qui est une mesure de la somme analogique des charges intégrées par chacun des pixels de ladite paire de pixels verticale pendant la durée d'exposition de la colonne respective, puis
   - établir une deuxième valeur numérique correspondant à l'autre durée d'exposition, par interpolation horizontale par le bloc de traitement numérique de premières valeurs numériques établies dans la séquence de lecture de la paire de lignes courante, pour au moins deux paires de pixels verticales sur des colonnes voisines, de part et d'autre de la colonne de la paire de pixels verticale considérée, où lesdites colonnes voisines sont associées à ladite autre durée d'exposition, et
   - établir une valeur haute dynamique de sortie pour ladite paire de pixels verticale à partir de ladite première valeur numérique, lue, et ladite deuxième valeur numérique, interpolée, par comparaison à au moins un premier seuil.

Selon un aspect de l'invention, le bloc de traitement numérique est configuré pour appliquer une opération supplémentaire de groupement horizontal de données dans chaque paire de lignes pour former un flux de données d'image haute dynamique en sortie du capteur. On établit ainsi pour chaque paire de lignes, une valeur haute dynamique de sortie par pavé de deux paires de pixels verticales successives de la paire de lignes, ladite valeur haute dynamique étant basée sur une addition numérique des deux valeurs hautes dynamiques des deux paires de pixels verticales du pavé.

Selon un autre aspect de l'invention, le capteur comprend un réseau de filtres couleurs, tel que les deux pixels de chaque paire de pixels verticale sont associés à une même couleur de filtre coloré et,
on définit avantageusement un macro-pixel couleur qui est un bloc de 4 pavés de 2x2 pixels, couvrant 4 lignes et 4 colonnes consécutives, chaque pavé formant de deux paires de pixels verticales, et on associe ce macro-pixel à un motif périodique de 4 filtres colorés, sur la base d'un pavé 2x2 par couleur de filtre du motif.

D'autres caractéristiques, détails et avantages de l'invention ressortiront à la lecture de la description suivante, faite en référence aux dessins annexés à titre d'exemple et qui représentent respectivement :
- la figure 1, un diagramme fonctionnel d'ensemble d'un capteur d'image conforme à l'invention ;
- la figure 2, un schéma électrique d'une paire de pixels actifs à nœud de lecture partagé pouvant être utilisé dans le capteur de la figure 1 ;
- la figure 3, un chronogramme des signaux de commande des pixels pour une prise d'image en mode normal, avec une durée d'exposition commune à tous les pixels, par un capteur d'image selon l'invention ;
- la figure 4, un schéma de principe de commande des pixels pour une intégration à deux durées d'intégration dans un mode d'acquisition haute dynamique HDR selon l'invention ;
- la figure 5, un graphe simplifié de la séquence d'intégration à deux durées d'exposition du mode d'acquisition HDR ;
- la figure 6, un schéma de principe de la séquence des phases de premier et deuxième transferts de charges dans les paires de pixels verticale du mode d'acquisition HDR ;
- la figure 7, un chronogramme des phases d'intégration globale, et de lecture séquentielle par paires de lignes du mode d'acquisition HDR;
- la figure 8, un schéma fonctionnel des étapes de lecture et reconstruction haute dynamique du mode HDR ;
- la figure 9, un schéma illustrant une variante du bloc de reconstruction haute dynamique ;
- la figure 10, un diagramme de courbes illustrant le principe de reconstruction dynamique, dans un exemple de mise en œuvre conforme au schéma de la figure 9 ; et
- la figure 11, un schéma de principe de reconstruction haute dynamique pour un capteur d'image couleur avec un arrangement de filtres colorés selon l'invention.

### DESCRIPTION DETAILLEE

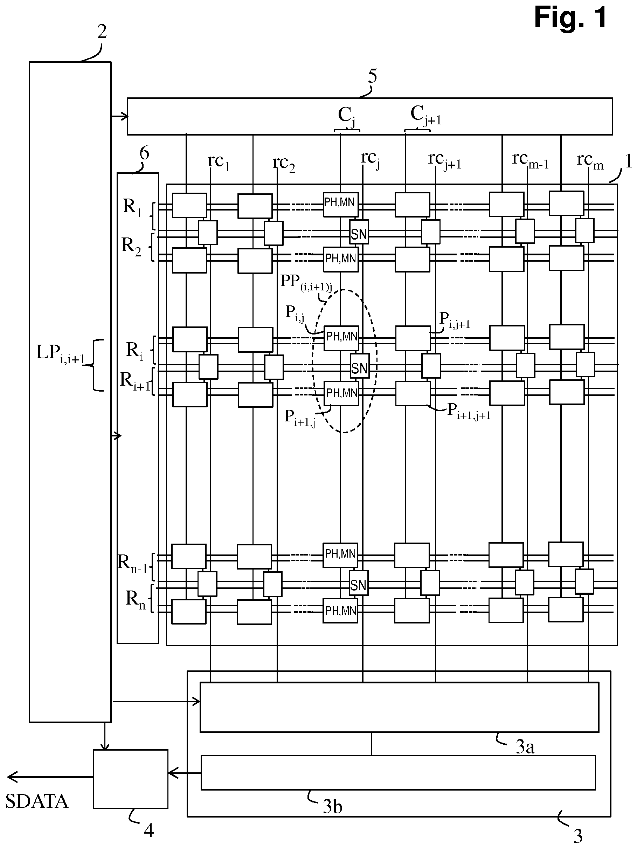

Comme illustré sur la figure 1, un capteur d'image selon l'invention comprend une matrice 1 de pixels actifs P_{i,j} agencés par lignes Rᵢ et colonnes Cⱼ, avec i=1 à n, j=1 à m, n et m entiers. Pour une application donnée, l'acquisition d'une image peut utiliser l'ensemble des lignes et colonnes de la matrice, ou une partie des lignes et colonnes, correspondant à des zones d'intérêt particulières. Ces différentes utilisations sont habituelles et sont couvertes par la présente invention. Un pixel actif est un pixel qui comprend des transistors autour de l'élément photosensible permettant de piloter les différentes phases d'intégration et de lecture du pixel.

Le capteur d'image comprend un contrôleur 2 qui est configuré pour piloter les transistors des pixels actifs, un circuit de lecture 3 et un bloc de traitement numérique 4, de manière à réaliser les différentes séquences d'intégration, de lecture et de mise en forme du flux de sortie de données d'image pour chaque prise d'image.

Le circuit de lecture 3 comporte une voie de lecture rcⱼ par colonne de pixels de la matrice, et le contrôleur 2 pilote la phase de lecture de tout ou partie de la matrice pour organiser la lecture des pixels ligne par ligne. Le circuit de lecture comprend en pratique un étage 3a d'échantillonnage et conversion analogique numérique des tensions présentes sur les voies de lecture respectives. Les données numériques délivrées en sortie, par un registre à décalage 3b, alimentent au fur et à mesure le bloc de traitement numérique 4, qui peut appliquer divers traitements numériques et mettre en forme le flux de données d'image de sortie SDATA délivré par le capteur. Par exemple, les données peuvent être fournies dans l'ordre de lecture, par ligne, et dans chaque ligne, dans l'ordre croissant des colonnes, ou bien elles sont fournies par colonne, et dans chaque colonne dans l'ordre croissant des lignes, en fonction du format attendu pour une application donnée. Ces différents aspects sont bien connus de l'homme de l'art. La structure de pixels actifs utilisée dans le capteur d'image de l'invention présente plusieurs particularités :
- c'est une structure à nœud mémoire MN et nœud de lecture SN distincts, permettant une capture instantanée, à obturateur global, combinée à une lecture par double échantillonnage corrélé vrai, dite lecture CDS, avec un échantillonnage d'un niveau de réinitialisation du pixel, puis un échantillonnage d'un niveau utile du pixel, et la donnée numérique fournie en sortie représente la conversion de la différence.
- c'est une structure à nœud de lecture SN partagé verticalement entre au moins deux pixels.

Le terme "vertical" désigne par convention la direction d'une colonne de la matrice, et le terme "horizontal", la direction d'une ligne de la matrice. Par exemple, sur la figure 1, si on considère la colonne Cⱼ de rang j, le pixel P_{i,j} sur la ligne Rᵢ de rang i et le pixel P_{i+1,j} sur la ligne de rang suivant Lᵢ₊₁ partagent un même nœud de lecture SN. Dans la suite on appelle paire de pixels verticale, chaque paire de la matrice qui partage un nœud de lecture. La notation PP_{(i,i+1)j} désigne la paire sur la colonne Cⱼ qui est formée par les deux pixels des lignes Rᵢ et Rᵢ₊₁ qui partagent un nœud de lecture SN.

Une structure de pixels ayant les particularités indiquées ci-dessus permet la mise en œuvre d'un mode de capture d'image haute dynamique à obturateur global pilotée par le contrôleur 2, d'une façon optimisée en termes de séquence de commande, cadence et résolution, en optimisant également les aspects de compacité et taux de remplissage des pixels.

Un capteur ayant l'architecture et la structure de pixels reflétées par la figure 1, permet la mise en œuvre de modes de capture d'image à obturateur global avec :
- pour la phase d'intégration à obturateur global, un mode de contrôle des durées d'exposition des pixels en fonction du rang des colonnes, qui permet d'appliquer :
   - une même durée d'exposition à tous les pixels, correspondant à un mode de capture normal, ou bien
   - deux durées d'exposition différentes en fonction du rang pair ou impair des colonnes, correspondant à un mode de capture haute dynamique.

   Ce contrôle des durées d'exposition selon les colonnes se traduit dans l'architecture du capteur, comme on peut le voir sur la figure 1, par une ligne de commande verticale, pour chaque colonne de la matrice, dont les effets s'appliquent à tous les pixels de la colonne respective. Les autres lignes de commande des pixels sont à commande horizontale c'est-à-dire que leurs effets s'appliquent à tous les pixels sur la ligne de matrice respective.
- pour la phase de lecture séquentielle, une séquence de lecture des paires de pixels verticales PP_{(i,i+1)j} par paire de lignes successives LP_{i,i+1}, tel que chaque nœud de lecture dans une paire de lignes LP_{i,i+1} est lu une seule fois (par prise d'image), par la voie de lecture de la colonne respective, et fournit une mesure d'un niveau de signal qui représente la contribution des deux pixels qui partagent ce nœud de lecture, pour la durée d'exposition de la colonne respective.

### EXEMPLE DETAILLE D'UNE STRUCTURE DE PIXEL ACTIF

Avant de décrire plus en détails les différentes phases de ce mode de capture haute dynamique, nous allons donner un exemple détaillé d'une structure de pixels actifs à nœud mémoire et à nœud de lecture partagé qui convient pour une utilisation dans un capteur selon l'invention.

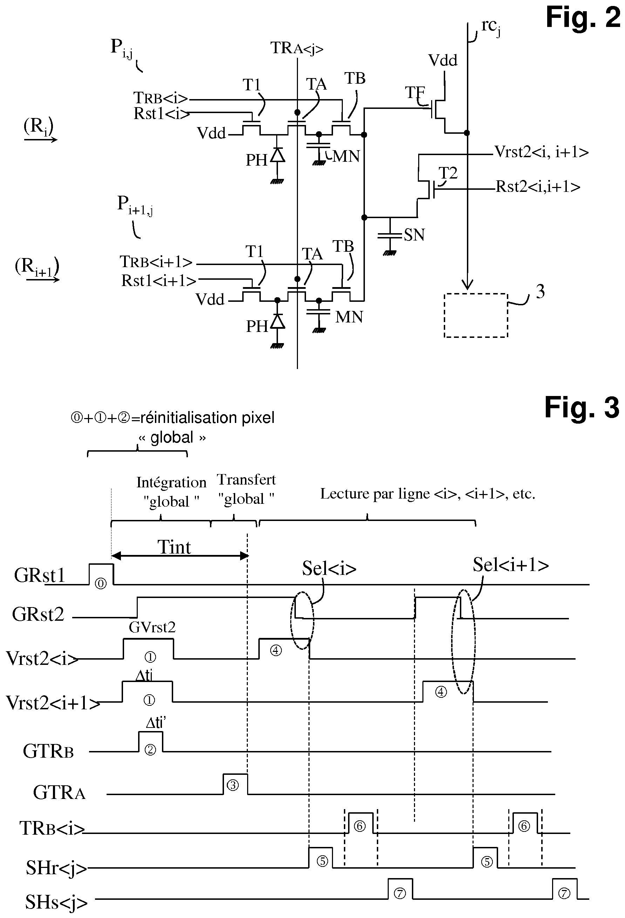

La structure de pixel qui est illustrée à la figure 2, comprend une photodiode PH, qui est l'élément du pixel exposé à la lumière, un nœud mémoire de charges MN, également appelé nœud mémoire dans la suite et un nœud de lecture SN, qui est partagé avec au moins un pixel suivant sur la même colonne. Par commodité, l'invention est généralement illustrée et expliquée pour un nœud mémoire partagé verticalement par deux pixels successifs. La structure de pixel comprend en outre :
- un premier transistor de réinitialisation T1, connecté entre la photodiode et une source de tension (Vdd dans l'exemple) permettant sélectivement de réinitialiser la photodiode avant chaque nouvelle phase d'intégration (prise d'image), par évacuation des charges vers la source de tension ;
- un deuxième transistor de réinitialisation T2 connecté au nœud de lecture SN, permettant sélectivement de réinitialiser le nœud de lecture dans la phase de lecture, par évacuation des charges vers une source d'alimentation du transistor ;
- un premier transistor de transfert de charges TA connecté entre la photodiode et le nœud mémoire MN ;
- un deuxième transistor de transfert de charges TB connecté entre le nœud mémoire MN et le nœud de lecture ; et
- un transistor TF monté en suiveur de tension qui permet d'appliquer la tension aux bornes du nœud de lecture SN sur la voie de lecture de la colonne du pixel, lorsque la ligne du pixel est sélectionnée en lecture.

Dans cette structure, le nœud de lecture SN, le deuxième transistor de réinitialisation T2 et le transistor monté en suiveur de tension TF sont partagés verticalement par deux pixels successifs dans une même colonne. On notera que le partage peut se faire entre deux pixels comme illustré, ou plus de pixels permettant d'améliorer la compacité du capteur : les modes de capture normal ou haute dynamique qui vont être décrits s'appliqueront de la même façon. Cette structure de la figure 2 est particulièrement compacte, puisque c'est en fait l'étage de lecture du pixel qui est partagé.

On pourrait utiliser une structure de pixel à nœud partagé qui comporte plus de transistors, sans sortir du principe de l'invention. Notamment, on aura noté que la structure de la figure 2 ne comporte pas de transistor spécifique de sélection de ligne, pour la lecture, car la fonction de sélection de ligne pour la lecture est avantageusement assurée par le transistor T2 de réinitialisation du nœud de lecture, en appliquant la tension d'alimentation de manière pulsée sur la borne respective des transistors T2 d'une ligne de pixels, avec une commande de grille appropriée qui permet d'actionner le transistor suiveur TF respectif des seuls pixels de la ligne à sélectionner en lecture. Ce mécanisme connu permet de réduire le nombre de transistors du pixel. On a ainsi pour chaque paire de lignes de pixels à "étage de lecture partagé", deux lignes de commande horizontale associées au transistor de réinitialisation du nœud de lecture des pixels : la ligne de polarisation notée Vrst2 qui commande toutes les électrodes de polarisation des transistors T2 et la ligne de réinitialisation Rst2 qui relie toutes les grilles des transistors T2. Mais le capteur pourrait tout aussi bien utiliser une structure moins compacte qui comprendrait un transistor supplémentaire dans l'étage de lecture commun aux deux pixels qui partagent leur nœud de lecture, et ce transistor serait spécifique pour la sélection en lecture. Dans ce cas l'électrode de polarisation du transistor T2 pourrait recevoir de façon continue la tension d'alimentation (Vdd).

Pour chaque ligne Rᵢ de pixels de la matrice, on a donc :
- une ligne de signal Rst1<i> de réinitialisation de photodiode (T1);
- une ligne de signal TR_{B}<i> de transfert (TB) du nœud mémoire vers le nœud de lecture.

Pour chaque paire de lignes Rᵢ et Rᵢ₊₁ regroupant les paires de pixel verticales (partageant verticalement leur nœud de lecture), on a deux lignes de signal Rst2<i,i+1> et Vrst2<i,i+1> pour la réinitialisation du nœud de lecture et la sélection en lecture.

On a donc comme le montre la figure 1, quatre lignes de signal par pixel dont deux sont communes à deux lignes de pixels successives. Ces lignes de signal s'étendent horizontalement comme les lignes de la matrice.

Pour chaque colonne Cⱼ de pixels, on a une ligne de signal TR_{A}<j> de commande de premier transfert (TA) qui s'étend verticalement, comme la colonne. C'est cette topologie de ligne verticale pour les premiers transferts (PH vers MN) qui va permettre comme on va le voir ensuite, de commander deux durées d'exposition différentes sur les colonnes paires et impaires dans la même phase d'intégration globale du capteur, dans un mode de capture haute dynamique selon l'invention.

Au total, on a 5 lignes de signal de commande par pixel, 4 horizontales et 1 verticale, qui sont pilotées par le contrôleur 2 pour réaliser une prise d'image selon un mode de capture à obturateur global, normal ou haute dynamique.

Dans la suite, lorsque l'on précise le rang de la ligne de commande, par exemple Rst1<i>, c'est que le signal indiqué ne s'applique qu'à cette ligne. Si le rang n'est pas précisé, c'est que le signal indiqué est un signal "global" appliqué simultanément à toutes les lignes de commande concernées.

### PRISE D'IMAGE A OBTURATEUR GLOBAL, MODE NORMAL

Une séquence de capture en mode normal est illustrée par le chronogramme de la figure 3. Elle débute par une phase de réinitialisation globale du pixel qui commence par la phase © de réinitialisation globale de toutes les photodiodes : le contrôleur applique le même signal de réinitialisation Grst1 simultanément sur toutes les lignes de signal Rst1de la matrice. La fin de cette phase marque le début de la phase d'intégration par tous les pixels simultanément. La phase de réinitialisation globale se poursuit pendant l'intégration, avec les phases ① et ② pour réinitialiser le nœud de lecture SN et le nœud mémoire MN. En pratique le deuxième transistor de réinitialisation T2 est d'abord activé pour tous les pixels simultanément de la matrice (signal global GRst2 appliqué sur toutes les lignes de signal Rst2), puis les lignes de signal Vrst2 appliquent simultanément (signal global GVrst2) une impulsion de tension de réinitialisation (Vdd) de largeur déterminée Δti, le temps de décharger le nœud de lecture SN (phase ①) dans tous les pixels; pendant cette durée Δti, le deuxième transistor de transfert TB est également activé dans tous les pixels de la matrice (signal global GTR_{B}) pendant une durée Δti', permettant de réinitialiser le nœud mémoire MN, via le nœud de lecture SN (phase ②) et le transistor T2 à ce moment est relié activement à la source de tension de réinitialisation.

La séquence d'intégration se termine pour tous les pixels de la matrice avec la commande de transfert global GTRA (phase③) appliquée simultanément à toutes les lignes de commande GR_{A}, qui provoque dans chaque pixel le transfert des charges intégrées par la photodiode pendant la durée d'intégration Tint vers le nœud de stockage MN du pixel.

La séquence de lecture des pixels de la matrice, ligne par ligne, commence. La sélection Sel<i> en lecture des pixels de la ligne Rᵢ (phase④) est obtenue par le jeu de la commande globale d'activation du transistor T2 (Grst2) dans tous les pixels simultanément, et de la commande d'une impulsion de tension de polarisation sur le transistor T2 des pixels de la ligne Rᵢ uniquement (Vrst2<i>). Le jeu des commandes Grst2 et Vrst2<i> en plus de réinitialiser le nœud de lecture de tous les pixels, assure aussi le maintien du nœud de lecture à un potentiel inférieur à la tension de seuil du transistor suiveur, sauf dans les pixels de la ligne Rᵢ que l'on souhaite lire, et ceci a pour effet d'activer le transistor suiveur de ces pixels : la tension aux bornes du nœud de lecture du pixel sélectionné est reportée par le transistor suiveur sur la voie de lecture respective. La phase de lecture des pixels de la ligne Rᵢ ainsi sélectionnée comporte alors de manière classique, sur chaque voie de lecture rcⱼ, un échantillonnage d'un niveau de réinitialisation d'abord (SHr<j> - phase ⑤) puis un "deuxième" transfert (TR_{B}<i> - phase ⑥) des charges du nœud mémoire MN dans le nœud de lecture SN ; et un échantillonnage du niveau de signal correspondant (SHs<j> - phase ⑦). Le circuit de lecture fournit alors en sortie le résultat de la conversion en numérique de la différence entre ces deux niveaux échantillonnés. Les phases ④ à ⑦ sont répétées pour chaque ligne de pixels à lire.

On comprend bien que chaque ligne de pixels est lue comme si chaque pixel avait son étage de lecture propre, bien que cet étage soit dans l'exemple structurellement partagé verticalement par deux pixels successifs. On comprend que le processus serait le même si l'étage de lecture était partagé avec plus de deux pixels successifs : à chaque fois, le nœud de lecture est réinitialisé et le transistor suiveur de la ligne à nouveau sélectionné ; mais par le jeu de la ligne de commande de deuxième transfert TR_{B}<i> propre à chaque ligne de la matrice, les charges qui sont transférées dans le nœud de lecture avant échantillonnage du niveau utile sont celles intégrées par le pixel de la ligne que l'on veut lire.

### PRISE D'IMAGE A OBTURATEUR GLOBAL, MODE HAUTE DYNAMIQUE

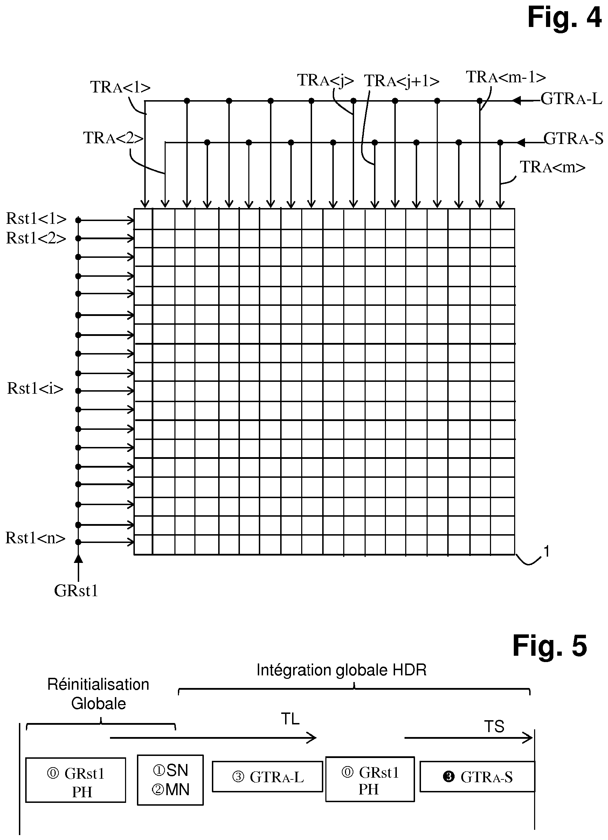

Une séquence de prise d'image par capture à obturateur global en mode haute dynamique avec un capteur selon l'invention est maintenant expliquée. Les principes de base de cette séquence en mode HDR sont présentés sur les figures 4 et 5.

Selon l'invention, on applique deux durées d'exposition TL et TS différentes selon la parité du rang des colonnes, par exemple la durée TL sur les colonnes impaires et la durée TS sur les colonnes paires. On choisit les conventions suivantes : la durée TL est plus longue que la durée TS ; et le rang j de la colonne Cⱼ est impair. On pourrait bien sûr choisir des conventions différentes sans rien changer au principe de l'invention.

On contrôle le début d'intégration par le signal de réinitialisation globale de toutes les photodiodes Grst1, appliqué simultanément sur toutes les lignes de commande Rst de la matrice.

On contrôle la fin des durée d'intégration : pour TL, par un signal global de premier transfert GTR_{A}-L appliqué simultanément sur toutes les lignes de commande de premier transfert des colonnes impaires uniquement (TR_{A}<1>,..., TR_{A}<j>,.. , TR_{A}<m-1>); pour TS, par un signal global de premier transfert GTRA-S appliqué simultanément sur toutes les lignes de commande de premier transfert des colonnes paires uniquement (TR_{A}<2>,..., TR_{A}<j+1>,.. , TR_{A}<m>).

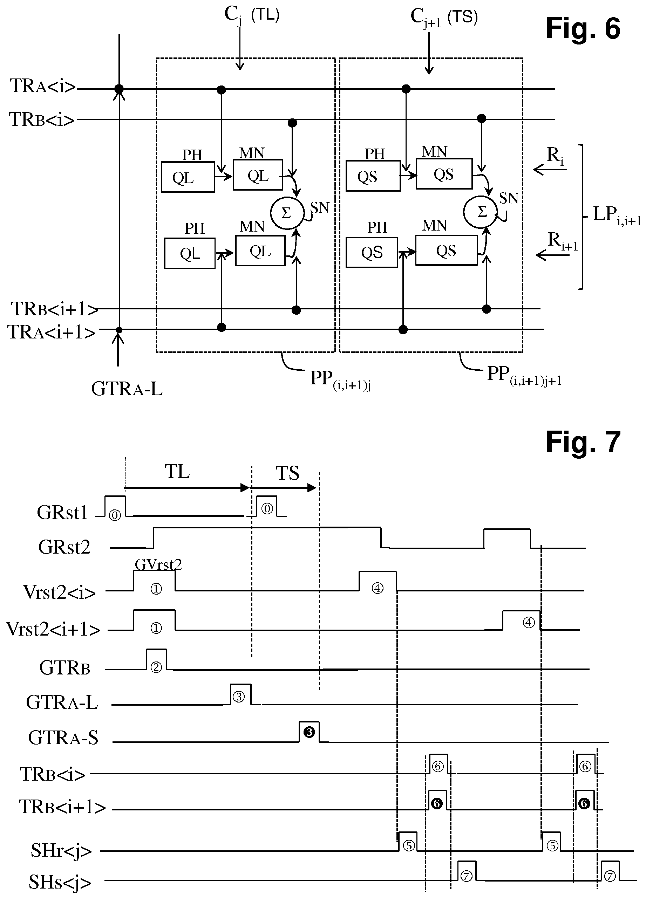

Dans l'exemple de mise en œuvre, les deux durées sont commandées l'une après l'autre. C'est-à-dire qu'après la première durée d'intégration TL qui s'applique à tous les pixels, on ne transfère dans leur nœud mémoire respectif MN que les charges QL (figure 6) intégrées par les pixels des rangs de colonne impair (GTR_{A}-L - phase ③ - figure 7) ; puis on réinitialise à nouveau toutes les photodiodes (phase ⓪) et après la deuxième durée d'intégration qui s'applique à tous les pixels, on ne transfère dans leur nœud mémoire respectif MN que les charges QS (figure 6) intégrées par les pixels des rangs de colonne pair (GTR_{A}-S - phase 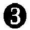 **-** figure 7). Le chronogramme de la figure 7 montre plus en détail cette succession des phases ⓪①②③ 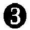 de l'intégration globale en mode HDR selon l'invention. Les figures 5 et 7 montrent des durées d'exposition TL et TS appliquées successivement, avec dans l'exemple la durée plus longue appliquée en premier. Mais les deux intégrations pendant les durées TL et TS peuvent se faire en parallèle, et la séquence ne comprend alors qu'une seule phase ⓪ de réinitialisation globale des photodiodes qui fixe le début commun des deux durées TL et TS. En pratique, les durées TL et TS sont des multiples d'un temps de référence du capteur, qui est souvent le temps ligne, de l'ordre de 10 microsecondes, ou un temps de référence plus court, de l'ordre de 1 à 2 microsecondes, dans les capteurs plus récents.

Le chronogramme de la figure 7 montre le détail de la séquence de lecture du mode haute dynamique selon l'invention. Dans cette séquence, on tire avantage du nœud de lecture partagé pour améliorer la résolution et la profondeur de signal, en groupant les pixels par paire verticale pour réaliser une sommation analogique des charges intégrées par les pixels d'une paire, dans leur nœud de lecture partagé, lors de la commande de deuxième transfert (TB) par laquelle les charges stockées dans le nœud mémoire sont transférées dans le nœud de lecture. Comme ces deuxièmes transferts sont commandés en ligne, le principe qui va être expliqué de lecture "HDR" par paires de pixel verticales s'applique aussi bien lorsque les nœuds de lectures sont partagés par plus de deux pixels, par exemple par quatre, ou six pixels.

La séquence de lecture des paires de pixels, par paire de lignes de la matrice, démarre après que les commandes de premier transfert global sur les colonnes impaires GTR_{A-L} et sur les colonnes paires GTRA-S ont été exécutées. A ce moment, dans chaque pixel de la matrice, le nœud mémoire MN contient la quantité de charges QL ou QS intégrées par la photodiode du pixel pendant la durée d'exposition respective du pixel, TL ou TS, qui est définie comme on l'a vu par le rang pair ou impair de la colonne du pixel (figure 6). Supposons que le contrôleur est en train de pointer, dans la séquence de lecture, sur la paire de lignes LP_{i,i+1} (figure 6). On a une paire de pixels verticale par colonne. Après la réinitialisation du nœud de lecture dans toutes les paires PP_{(i,i+1)j} de pixels de la paire de lignes courante et la sélection de l'étage de lecture de chaque paire PP_{(i,i+1)j} via le transistor T2 (phase ④), le niveau de réinitialisation du nœud de lecture est échantillonné dans la voie de lecture correspondante rcⱼ (phase ⑤) comme dans le mode normal. La séquence se poursuit avec une commande de deuxième transfert (MN vers SN) dans chacune des paires de pixels de la paire de lignes courante, qui s'applique aux deux pixels dans chaque paire verticale, via les lignes de commande correspondantes TRB<i> et TRB<i+1>. Ce sont les phases ⑥ et 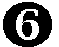 (figure 7), de préférence concomitantes pour optimiser le temps de lecture au maximum. Ces phases conduisent à une sommation analogique des charges dans le nœud de lecture SN de chaque paire de pixels verticale, sans pertes : la quantité de charges dans le nœud SN de lecture de la paire PP_{(i,i+1)j} est égale à QLᵢ + QLᵢ₊₁ ; et la quantité de charges dans le nœud SN de lecture de la paire PP_{(i,i+1)j+1} est égale à QSᵢ + QSᵢ₊₁.

Le niveau de signal utile sur chaque nœud de lecture est alors échantillonné (phase ⑦) et une valeur numérique correspondante, obtenue par conversion analogique de la différence entre les deux échantillons, est fournie en sortie du circuit de lecture pour chaque voie de lecture, correspondant à une mesure de la quantité de charges intégrée par la paire de pixels concernée, pour le temps d'exposition de la colonne associée.

Dans la suite, on appelle cette valeur numérique, première valeur numérique, notée VL ou VS selon qu'elle est obtenue sur une colonne impaire appliquant TL, ou paire, appliquant TS. Lorsque cette valeur VL ou VS est associée à un indice, l'indice identifie la paire de pixels verticale qui a fourni ladite première valeur, dans la paire de ligne courante (sur laquelle le contrôleur pointe dans la séquence de lecture).

Le registre de sortie 3b du circuit de lecture fournit en sortie un flux de données brutes qui, pour chaque paire de lignes de la matrice successivement lue dans la matrice, est une suite de données numériques fournies par chacune des voies de lecture successivement, qui commence par exemple par la première valeur numérique fournie par la première colonne rc₁, et se termine par la première valeur numérique fournie par la dernière colonne rcₘ, et ainsi de suite pour chaque paire de lignes de la matrice.

Par rapport au mode de lecture normale, on va donc deux fois plus vite. En outre le rapport signal sur bruit est amélioré du fait de la sommation analogique dans chaque paire.

Les différents circuits de lecture 3 et de traitement numérique 4 étant pilotés et cadencés par le contrôleur 2, le bloc de traitement numérique 4 sait associer chaque donnée du flux numérique qu'il reçoit du circuit de lecture à la paire de pixels concernée, par le jeu classique de pointeurs sur les lignes et les colonnes.

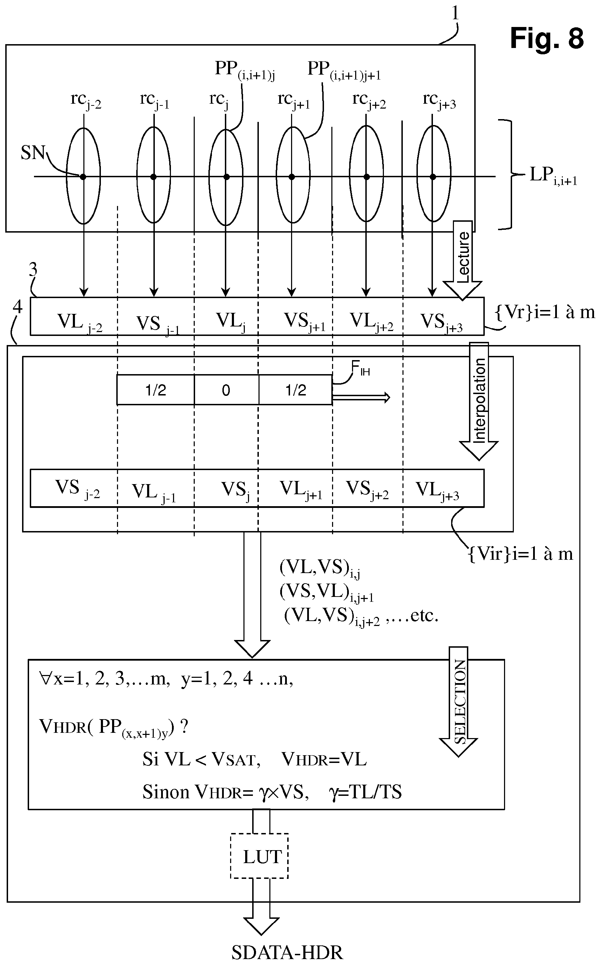

Par exemple, comme illustré sur la figure 8, lors de la séquence de lecture HDR, pour la paire de lignes courante, LP_{i,i+1} par exemple, le bloc de traitement 4 va recevoir en succession un ensemble {Vr} de m valeurs lues, une par colonne, et notamment les valeurs VLⱼ₋₂, VSⱼ₋₁, VLⱼ, VSⱼ₊₁, VLⱼ₊₂ et VSⱼ₊₃ pour les colonnes j-2 à j+3 (j étant impair, associé à TL).

Le contrôleur applique un filtre d'interpolation F_{IH} en ligne, "interpolation horizontale", sur cet ensemble de valeurs {Vr} obtenu pour la paire de lignes courante, pour associer à chaque valeur Vr obtenue pour la durée d'exposition de la colonne concernée, une autre valeur Vir correspondant à l'autre durée d'exposition, qui est une approximation de ce que la paire de pixels aurait fournie si elle avait été exposée à cette autre durée d'exposition. Ce calcul d'interpolation est réalisé en quelques coups d'horloge et l'on obtient en sortie un flux de données comprenant deux valeurs VL et VS par paire de pixels verticale, correspondant aux deux durées d'exposition TL et TS, dont l'une est une valeur lue Vr ("première valeur numérique") qui correspond à la durée d'exposition réelle des pixels de la paire concernée, et l'autre est une valeur interpolée Vir ("deuxième valeur numérique") qui correspond à l'autre durée d'exposition. La taille du filtre utilisé est au minimum de 3, correspondant à un filtre moyenneur (Figure 8), mais on peut envisager une taille plus grande, si l'on souhaite plus de détails haute fréquence.

Le bloc de traitement numérique 4 est configuré pour ensuite appliquer à chaque paire de pixels une étape de reconstruction de données à haute dynamique, par sélection par comparaison à au moins une valeur de seuil, qui représente une valeur de saturation VSAT des pixels. Il s'agit en effet de choisir la meilleur valeur, contenant le plus d'information, pour chaque paire de pixels. La boucle de comparaison consiste pour chaque paire de pixels, à prendre la valeur parmi la première valeur (lue) et la deuxième valeur (interpolée) établies pour la paire de pixels, qui est la valeur VL associée à la durée d'exposition la plus longue TL, pour comparer cette valeur VL au seuil de saturation V_{SAT}. Avec la convention retenue (j impair), et pour les paires de pixels des colonnes paires, cette valeur VL à comparer est la deuxième valeur, interpolée (Vir) ; pour les paires de pixels des colonnes impaires, cette valeur VL est la première valeur, lue (Vr). Le bloc de traitement numérique sait par le jeu de pointeurs sélectionner cette valeur VL dans chaque couple de valeurs obtenue pour la paire de lignes courante.

Si cette VL est inférieure à VSAT, alors c'est la valeur haute dynamique retenue (sélectionnée) pour la paire de pixels verticale considérée.

Sinon, c'est l'autre valeur numérique VS qui correspond à la durée d'exposition la plus courte, qui est retenue comme valeur haute dynamique pour la paire de pixels verticale considérée.

Ainsi, en fonction de la scène d'image capturée et des conditions d'éclairement, pour certaines paires de la matrice, c'est la valeur correspondant à la durée d'exposition plus courte qui est retenue et pour d'autres, c'est la valeur correspondant à la durée d'exposition plus longue. Pour conserver la linéarité de la réponse, il faut mettre ces valeurs dans la même échelle de comptage. Si on se base sur la durée d'exposition plus courte TS, lorsque c'est la valeur VL qui est retenue par la boucle de sélection HDR, il faut la diviser par le rapport γ=TL/TS. La valeur haute dynamique établie pour chaque paire de pixels est alors ou bien VL/ y, ou bien VS.

Dans ce schéma de sélection par comparaison à un seul seuil, la valeur VL est systématiquement conservée si elle est sous le seuil VSAT, qu'elle ait été obtenue par lecture (exposition réelle à TL) ou par interpolation. Au-dessus du seuil, on utilise systématiquement la valeur VS, qu'elle ait été obtenue par lecture (exposition réelle à TS) ou par interpolation. De ce fait, on perd en finesse de détails à restituer : la fonction de transfert de modulation FTM n'est pas optimale.

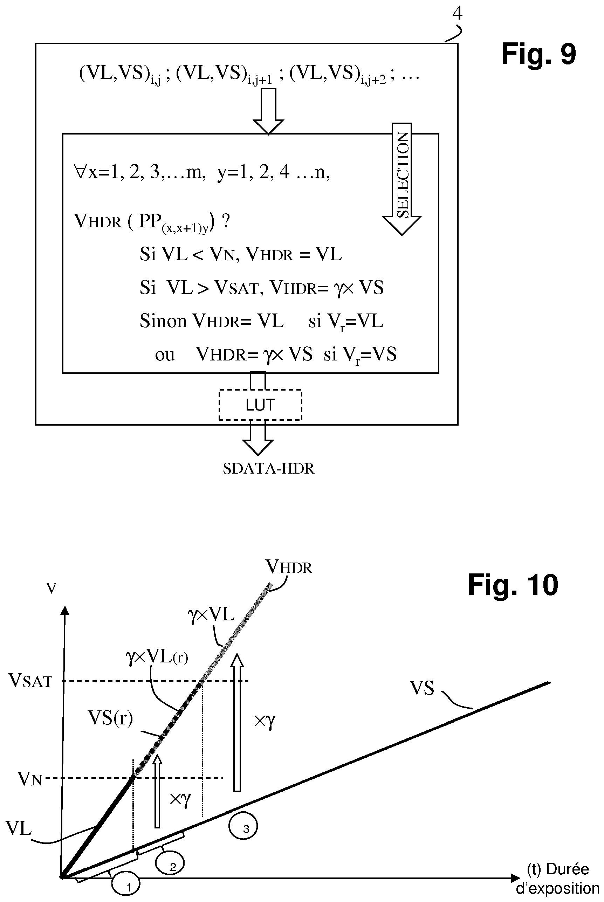

Dans une variante, on améliore la FTM, en définissant un seuil de bruit et un seuil de saturation, tel que, entre ces deux seuils, on utilise seulement les valeurs lues, correspondant aux durées d'exposition réelles de paires de pixels, au facteur γ de linéarisation près. C'est ce qui est représenté sur la figure 9. Les deux seuils, de bruit VN et de saturation V_{SAT} sont définis par rapport à la durée d'exposition la plus longue TL. A chaque fois que la valeur VL (lue ou interpolée) d'une paire de pixels est comprise entre ces deux seuils, la valeur HDR pour cette paire de pixels est la valeur lue, correspondant à la durée d'exposition réelle de la paire de pixels considérée (au facteur γde linéarisation près). C'est la zone 2 sur la figure 10. Sous le seuil V_{N} (zone 1), la valeur HDR retenue est la valeur VL, qui est une valeur lue ou interpolée, selon le rang de la colonne ; au-dessus du seuil V_{SAT} (zone 3) la valeur HDR retenue est la valeur VS, qui est une valeur lue ou interpolée, selon le rang de la colonne.

La figure 10 montre comment on construit le flux de données haute dynamique V_{HDR} par comparaison de la valeur VL de chaque paire de pixels verticale à deux seuils VN et VSAT, en se calant sur l'échelle de mesure de la durée d'exposition plus longue TL. Dans ce cas, lorsque la valeur VS est retenue par la boucle de sélection HDR, il faut la multiplier par le rapport γ=TL/TS. La valeur haute dynamique établie pour chaque paire de pixels est alors ou bien γ.VS, ou bien VL.

De cette façon, on peut gagner en profondeur de données. Sur la figure 10 cela se voit avec la courbe des valeurs VHDR qui s'étend en ordonnée au-delà du seuil de saturation VSAT. Plus précisément en fixant les durées TL et TS de sorte que leur rapport soit un entier qui est une puissance de deux, la profondeur de données est augmentée du nombre de bits qui correspond à la valeur de puissance de deux du rapport γ. Par exemple, si ce rapport γ est égal à 2, on a un bit de profondeur supplémentaire. Si ce rapport est égal à 2⁷, on a 7 bits de profondeur de champ supplémentaire.

Dans ce cas, le bloc de traitement numérique peut être configuré pour appliquer une table de correspondance (LUT) (Figure 8) codant une courbe de compression pour correspondre au format de données de sortie du capteur, qui en pratique correspond à la profondeur maximum de codage du convertisseur analogique numérique du capteur. En général le convertisseur analogique numérique code le signal d'image sur 8, 10 ou 12 bits (fixé par l'utilisateur) et l'interface de sortie du capteur est donc prévue pour sortir des données codées sur 12 bits au maximum. Supposons pour une application donnée, que le convertisseur soit paramétré, pour la prise d'image, pour un codage sur 10 bits et que le mode HDR soit configuré avec deux durées TL et TS qui ont un rapport TL/TS égal à 4 (2²) : alors les données HDR en sortie, après mise à l'échelle (. γ), sont codées sur 12 bits (2 bits supplémentaires), et le flux de données haute dynamique SDATA-HDR formé directement par les données VHDR de l'étape de sélection du bloc de traitement numérique 4. Mais si le rapport γ est supérieur, on passe ces données V_{HDR} par la table de compression (LUT). De préférence, la table code une courbe de compression en S pour perdre le moins d'information utile. Le système externe doit alors avoir la table de décompression inverse pour récupérer toute la dynamique (profondeur) des données.

### TRAITEMENT DE LA COULEUR

Tout ce qui vient d'être dit peut s'appliquer à un capteur d'image couleur à haute dynamique, dont le réseau de filtres colorés est tel qu'il applique la même couleur de filtres à chaque paire de pixels verticale selon l'invention.

Si on prend l'exemple d'un filtre de Bayer appliqué de manière classique : on a une alternance de filtres Rouge (noté R) et Vert (noté G) sur une première ligne de pixels, et une alternance de filtres Bleu (noté B) et Vert (noté G) sur la ligne de pixels suivante, définissant un motif périodique RGGB couvrant 2 X 2 pixels, et qui permet de calculer par dématriçage une luminance et une chrominance.

Pour bénéficier du mode HDR, qui groupe les pixels par paire verticale partageant un nœud de lecture, il faut que les deux pixels de chaque paire soient associés à la même couleur. Après lecture et reconstruction HDR, on obtient quatre informations HDR couleurs correspondantes RGGB, chaque information couleur étant obtenue d'une paire de pixels verticale.

Mais on peut encore optimiser ce mode couleur haute dynamique, en prévoyant en plus du regroupement vertical par couleur, un regroupement horizontal par couleur. Le regroupement vertical correspond à la sommation analogique dans le nœud de lecture expliqué précédemment.

Le regroupement horizontal correspond à une sommation numérique des valeurs HDR de deux paires de pixels verticales voisines, "de même couleur".

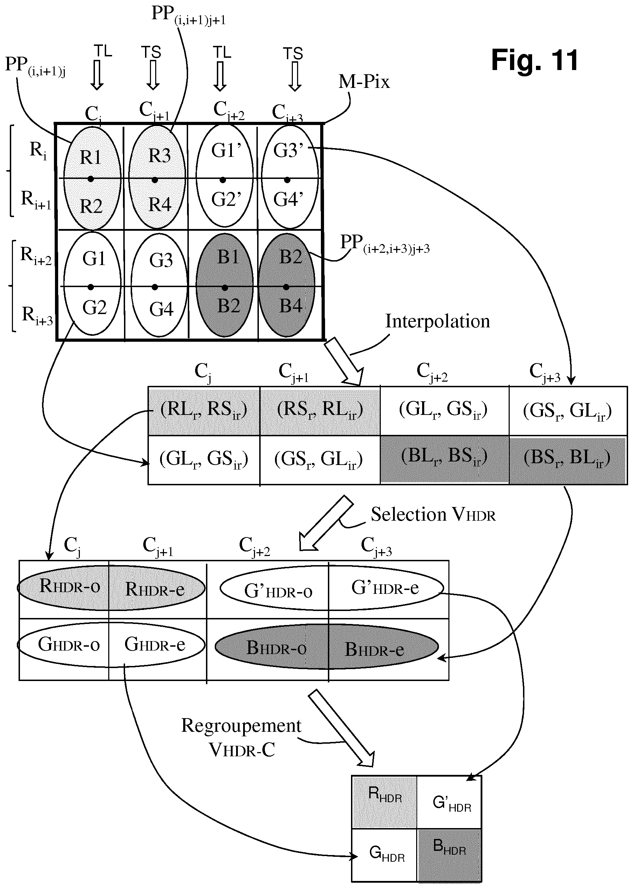

La figure 11 permet d'expliquer les différents aspects de ce perfectionnement couleur. Pour l'explication, on prend en exemple un filtre de Bayer appliquant un motif de 4 filtres colorés sur chaque bloc de 2x2 pixels d'une matrice, 1 rouge et 1 vert sur une ligne et un vert et un bleu sur l'autre ligne.

Selon l'invention, on définit dans une matrice de pixels d'un capteur d'image qui a l'architecture fonctionnelle et la structure de pixels de la figure 1, un macro-pixel couleur M-Pix, qui est un bloc de 4 pavés de 2x2 pixels, couvrant 4 lignes et 4 colonnes consécutives et on associe à chacun des quatre pavés de pixels, une couleur parmi les quatre couleurs de filtre de Bayer. C'est comme si on définissait un super filtre de Bayer, où chaque filtre coloré couvrirait un bloc de 2x2 pixels.

Autrement dit : chaque pixel est associé à un filtre coloré ; chaque pavé définit deux paires de pixels verticales dont les pixels sont associés à la même couleur de filtre coloré ; et le motif périodique de filtres colorés appliqué à la matrice couvre quatre pavés de pixels correspondants à deux paires de lignes successives et quatre colonnes successives.

Ce macro-pixel, contient pour chaque couleur, deux paires de pixels verticales respectives, qui sont alignées horizontalement : une paire de pixels est associée à une colonne impaire, exposée à la durée associée, TL dans l'exemple, et l'autre paire est associée à une colonne paire, exposée à la durée associée, TS dans l'exemple.

Après lecture en mode HDR, puis interpolation par le bloc de traitement numérique 4 comme expliqué précédemment (figure 8), on obtient pour chaque paire une valeur lue (indice r) et une valeur interpolée (indice ir), l'une correspondant à la durée d'exposition plus longue TL, et l'autre à la durée d'exposition plus courte TS (selon le rang de la colonne) dans la "couleur" des pixels de la paire. C'est-à-dire, si on considère par exemple les deux paires verticales "Rouges", la première paire PP_{(i,i+1)j} étant formée des pixels rouge R1 et R2 et la deuxième PP_{(i,i+1)j+1} des pixels verts R3 et R4. Pour la première paire (R1, R2), la valeur "rouge" lue est RLᵣ pour la durée d'exposition TL de la colonne respective Cⱼ et la valeur interpolée, est RSᵣ pour l'autre durée TS. Pour la deuxième paire (R3, R4) qui est exposée à la durée d'exposition TS, la valeur lue est RSᵣ et la valeur interpolée est RLᵢᵣ.

Après l'étape de reconstruction HDR, par sélection d'une valeur parmi les deux valeurs lue et interpolée de chaque paire de pixels verticale (relativement à un ou deux seuils comme expliqué précédemment), et mise à l'échelle le cas échéant (facteur y), on obtient une valeur couleur HDR par paire de pixels colorée. Par exemple, pour les deux paires verticales rouges du macro-pixel couleur de la figure 11, on obtient une valeur RHDR-o pour la première paire (R1,R2) située sur une colonne de rang impair ("o" comme "odd") et une valeur RHDR-e pour la deuxième paire (R3,R4) située sur la colonne de rang pair suivante ("e" comme "even").

Selon l'invention, le bloc de traitement numérique 4 est configuré pour additionner ces deux valeurs RHDR-o et RHDR-e, pour fournir la valeur HDR couleur correspondante RHDR. C'est-à-dire qu'à chaque macro-pixel couleur M-PIX correspond en sortie 4 informations couleur haute dynamique, une par couleur du filtre, obtenue par regroupement vertical dans la phase de lecture (sommation analogique), puis regroupement HDR horizontal V-HDR-C, après reconstruction HDR par sélection (et mise à l'échelle) appliquée sur chaque paire dans la phase de traitement (par le bloc de traitement 4).

Le flux de données couleur en sortie est compatible des algorithmes de traitement couleur habituels (dématriçage) associés à des filtres couleur de dimension 2x2, quatre couleurs. Le capteur d'image couleur configuré pour être utilisé en mode HDR selon l'invention présente les avantages précédemment indiqués : temps de transfert amélioré dans un rapport 2 (une lecture par paires de lignes) ; temps de transmission en sortie réduit (une donnée couleur HDR de sortie par bloc de 4 pixels) induisant un coût de traitement numérique tel que balance des blancs réduits (moins de mémoire et temps de traitement réduit) ; meilleur rapport signal à bruit (sommation analogique dans chaque paire). Un autre avantage est que ce mode HDR est conduit sans altération du champ de vision du capteur.

Un capteur d'image couleur défini avec un filtre couleur correspondant à une structure de macro-pixel selon l'invention, permet une reconstruction HDR couleur optimisée temps en termes de compacité que de temps de transfert, transmission et traitement. Le filtre couleur peut utiliser d'autres combinaisons de couleurs que celles (rouge, vert bleu) définies par le filtre de Bayer, comme il est connu dans l'état de l'art.

On remarquera que la reconstruction HDR couleur décrite, combinant un regroupement vertical à la lecture et un regroupement horizontal sur les données haute dynamique reconstruites, peut aussi s'appliquer à un capteur d'image sans filtrage couleur, notamment pour bénéficier du taux de réduction de flux de données en sortie (1 donnée pour 4 pixels).

## Revendications

1. Capteur d'image à pixels actifs comportant :
- une matrice de pixels (1) arrangés en lignes (rᵢ) et colonnes (cⱼ), où les lignes (Rᵢ) définissent un alignement horizontal de pixels et les colonnes (Cⱼ), un alignement vertical de pixels ;
- un circuit de lecture (3) comportant une voie de lecture distincte (rcⱼ) par colonne de pixels (Cⱼ) et configuré pour établir par conversion analogique numérique, une valeur numérique représentative de la quantité de charges intégrées par un pixel pendant une durée d'exposition du pixel, et fournir en sortie successivement lesdites valeurs numériques établies dans chaque voie de lecture pour chaque ligne de la matrice ;
- un bloc de traitement numérique (4) configuré pour appliquer des traitements numériques auxdites valeurs numériques fournies en sortie par le circuit de lecture ; et
la structure des pixels étant telle que chaque pixel comprend :
• une photodiode (PHD), un nœud mémoire (MN) et un nœud de lecture (SN), et
• un premier transistor de réinitialisation de photodiode (T1) configuré pour réinitialiser sélectivement la photodiode,
• un deuxième transistor de réinitialisation de nœud de lecture (T2) configuré pour réinitialiser sélectivement le nœud de lecture,
• un premier transistor de transfert (TA) pour autoriser sélectivement le transfert des charges électriques intégrées par la photodiode, dans le nœud mémoire (MN),
• un deuxième transistor de transfert (TB) pour autoriser sélectivement le transfert des charges stockées dans le nœud mémoire (MN), dans le nœud de lecture (SN),
• un transistor (TF) monté en suiveur de tension et configuré pour appliquer sélectivement la tension aux bornes du nœud de lecture (SN) sur la voie de lecture (rcᵢ) de la colonne du pixel, lorsque la ligne du pixel est sélectionnée en lecture, **caractérisé en ce que** :
• dans chaque colonne de pixels, le nœud de lecture, le transistor de réinitialisation du nœud de lecture et le transistor monté en suiveur de tension sont partagés verticalement par au moins deux pixels successifs dans la colonne,
• les premier et deuxième transistors de réinitialisation (T1, T2) et le deuxième transistor de transfert (TB) sont chacun pilotés par un signal respectif de commande (Rst1<i>, Rst2<i>, TR_{B}<i,i+1>) commun à tous les pixels d'une même ligne et le premier transistor de transfert (TA) est piloté par un signal de commande (TR_{A}<j>) commun à tous les pixels d'une même colonne de pixels ; et
le capteur comprenant également un contrôleur (2) configuré pour piloter les transistors des pixels, le circuit de lecture et le bloc de traitement numérique pour commander une prise d'image à obturation globale en mode haute dynamique comportant :
• une phase d'intégration à obturation globale comprenant
- une exposition globale des pixels des colonnes impaires pendant une première durée d'intégration (TL) qui débute après une réinitialisation globale des photodiodes de la matrice, et qui se termine simultanément pour tous les pixels des colonnes impaires, avec un premier transfert global (GTR_{A-L}) de charges des photodiodes vers le nœud mémoire desdits pixels ; et
- une exposition globale des pixels des colonnes paires pendant une deuxième durée d'intégration (TS) différente de la première qui débute après une réinitialisation globale des photodiodes de la matrice, et qui se termine simultanément pour tous les pixels des colonnes paires, avec un premier transfert global (GTR_{A-S}) de charges de la photodiode vers le nœud mémoire (MN) desdits pixels, et puis
• une phase de lecture séquentielle, par paire de lignes (LP_{i,i+1}), les pixels d'une paire de lignes situés sur une même colonne (Cⱼ) formant deux à deux une paire de pixels verticale à nœud de lecture partagé (SN) et ladite phase de lecture est telle qu'une séquence de lecture d'une paire de lignes comprend pour chaque paire de pixels verticale (PP_{(i,i+1)j}), les étapes de :
- établir une première valeur numérique (Vᵣ) par le circuit de lecture (2), qui est une mesure de la somme analogique des charges intégrées par chacun des pixels de ladite paire de pixels verticale pendant la durée d'exposition de la colonne respective, puis
- établir une deuxième valeur numérique (Vᵢᵣ) correspondant à l'autre durée d'exposition, par interpolation horizontale (FIH) par le bloc de traitement numérique (4) de premières valeurs numériques établies dans la séquence de lecture de la paire de lignes courante, pour au moins deux paires de pixels verticales sur des colonnes voisines, de part et d'autre de la colonne de la paire de pixels verticale considérée, où lesdites colonnes voisines sont associées à ladite autre durée d'exposition, et
- établir une valeur haute dynamique de sortie (V_{HDR}) pour ladite paire de pixels verticale à partir de ladite première valeur numérique, lue, et ladite deuxième valeur numérique, interpolée, par comparaison à au moins un premier seuil (V_{SAT}).

2. Capteur d'image selon la revendication 1, dans lequel le bloc de traitement numérique (4) est configuré pour appliquer une opération supplémentaire (V_{HDR}-C) de groupement horizontal de données dans chaque paire de lignes pour former un flux de données d'image haute dynamique en sortie du capteur, ladite opération supplémentaire établissant pour chaque paire de lignes, une valeur haute dynamique de sortie par pavé de deux paires de pixels verticales successives de la paire de lignes, ladite valeur haute dynamique étant basée sur une addition numérique des deux valeurs hautes dynamiques des deux paires de pixel verticales du pavé.

3. Capteur d'image selon la revendication 1 ou 2, dans lequel le bloc de traitement numérique (4) est configuré pour établir la valeur haute dynamique de chaque paire de pixels verticale par comparaison à un premier seuil (V_{SAT}) tel que
• si la valeur numérique (VL) parmi lesdites première et deuxième valeurs numériques qui correspond à la durée d'exposition la plus longue est inférieure au premier seuil, c'est la valeur numérique utilisée pour établir la valeur haute dynamique de sortie (V_{HDR}),
• sinon, l'autre valeur numérique (VS), qui correspond à la durée d'exposition la plus courte, est utilisée pour établir la valeur haute dynamique de sortie.

4. Capteur d'image selon la revendication 1 ou 2, dans lequel le bloc de traitement numérique (4) est configuré pour établir la valeur haute dynamique de chaque paire de pixels verticale par comparaison à un premier seuil (V_{N}) et un deuxième seuil (V_{SAT}), tel que
• si la valeur numérique (VL) parmi lesdites première et deuxième valeurs numérique qui correspond à la durée la plus longue est inférieure au premier seuil, c'est la valeur utilisée pour établir la valeur haute dynamique de sortie,
• si ladite valeur numérique (VL) est comprise entre le premier et le deuxième seuil, la valeur numérique utilisée pour établir la valeur haute dynamique de sortie est la première valeur numérique (Vr),
• si ladite valeur numérique (VL) est supérieure au deuxième seuil, la valeur numérique utilisée pour établir la valeur haute dynamique de sortie est celle qui correspond à la durée d'exposition la plus courte (VS).

5. Capteur d'image selon l'une quelconque des revendications 1 à 4, dans lequel le bloc de traitement numérique est configuré pour établir la valeur haute dynamique de sortie de chaque paire dans une échelle qui est celle associée à la durée d'exposition la plus longue, de sorte que lorsque la valeur numérique utilisée pour établir la valeur numérique haute dynamique de la paire de pixels considérée correspond à la durée d'exposition la plus courte, ladite valeur est multipliée par le rapport de la durée d'exposition plus longue sur la durée d'exposition plus courte.

6. Capteur d'image selon la revendication 5, dans lequel ledit rapport est un nombre entier qui est une puissance de deux.

7. Capteur d'image selon la revendication 6, dans lequel le bloc de traitement numérique (4) applique une compression (LUT) auxdites valeurs hautes dynamiques lorsque le rapport entre les deux durées d'exposition est tel que la profondeur en nombre de bits des valeurs hautes dynamiques dépasse un format de sortie des données du capteur.

8. Capteur d'image selon l'une quelconque des revendications 1 à 7, comportant un réseau de filtres couleurs, tel que les deux pixels de chaque paire de pixels vertical sont associés à une même couleur de filtre coloré.

9. Capteur d'image selon la revendication 8, définissant un macro-pixel couleur (M-Pix) qui est un bloc de 4 pavés de 2x2 pixels, couvrant 4 lignes et 4 colonnes consécutives, chaque pavé formant de deux paires de pixels verticales, et ledit macro-pixel étant associé à un motif périodique de 4 filtres colorés, avec un pavé par couleur de filtre du motif.

10. Capteur d'image selon l'une quelconque des revendications 1 à 9, dans lequel le contrôleur (2) est configuré pour piloter une unique réinitialisation globale de photodiodes fixant le début desdites première et deuxième durée d'exposition, et lesdites exposition globales des colonnes paires et impaires commencent en même temps pour tous les pixels.

11. Capteur d'image selon l'une quelconque des revendications 1 à 9, dans lequel le contrôleur est configuré pour commander une première réinitialisation globale (GR) des photodiodes fixant le début de ladite première durée d'intégration, puis après la fin de ladite première durée d'intégration, une deuxième réinitialisation globale (GR) de photodiodes fixant le début de ladite deuxième durée d'intégration.

12. Capteur d'image selon l'une quelconque des revendications précédentes, dans lequel chaque phase d'intégration comprend après ladite réinitialisation globale des photodiodes, une réinitialisation globale des nœuds de lecture, et dans le temps de ladite réinitialisation globale des nœuds de lecture, une réinitialisation globale des nœuds mémoire via l'activation globale des deuxièmes transistors de transfert.

13. Capteur d'image selon l'une quelconque des revendications précédentes, dans lequel la sélection en lecture pour une paire de lignes, est obtenue par le deuxième transistor de réinitialisation (T2) des pixels, le contrôleur étant configuré pour activer sélectivement ledit transistor en correspondance avec une commutation sélective d'une impulsion de tension de réinitialisation sur une électrode de polarisation dudit transistor.

## Patentansprüche

1. Bildsensor mit aktiven Pixeln, aufweisend:
- eine Matrix von Pixeln (1), die in Zeilen (rᵢ) und Spalten (cⱼ) angeordnet sind, wobei die Zeilen (Rᵢ) eine horizontale Pixelausrichtung und die Spalten (Cⱼ) eine vertikale Pixelausrichtung definieren;
- eine Leseschaltung (3), die einen separaten Lesekanal (rcⱼ) pro Pixelspalte (Cⱼ) aufweist und ausgelegt ist, um durch Analog-Digital-Wandlung einen numerischen Wert zu ermitteln, der für die Menge der von einem Pixel integrierten Ladungen während einer Expositionsdauer des Pixels repräsentativ ist und am Ausgang die in jedem Lesekanal für jede Zeile der Matrix ermittelten numerischen Werte sukzessiv bereitzustellen;
- einen numerischen Verarbeitungsblock (4), der ausgelegt ist, um auf die am Ausgang von der Leseschaltung bereitgestellten numerischen Werte numerische Verarbeitungen anzuwenden; und
wobei die Struktur der Pixel derart ist, dass jedes Pixel umfasst:
• eine Fotodiode (PHD), einen Speicherknoten (MN) und einen Leseknoten (SN), und
• einen ersten Fotodioden-Reinitialisierungstransistor (T1), der ausgelegt ist, um die Fotodiode selektiv zu reinitialisieren,
• einen zweiten Leseknoten-Reinitialisierungstransistor (T2), der ausgelegt ist, um den Leseknoten selektiv zu reinitialisieren,
• einen ersten Transfertransistor (TA), um die Übertragung der von der Fotodiode integrierten elektrischen Ladungen in den Speicherknoten (MN) selektiv zu gestatten,
• einen zweiten Transfertransistor (TB), um die Übertragung der im Speicherknoten (MN) gespeicherten Ladungen in den Leseknoten (SN) selektiv zu gestatten,
• einen Transistor (TF), der als Spannungsfolger montiert und ausgelegt ist, um die Spannung an den Klemmen des Leseknotens (SN) über den Lesekanal (rcᵢ) der Spalte des Pixels selektiv anzulegen, wenn die Zeile des Pixels zum Lesen ausgewählt ist, **dadurch gekennzeichnet, dass**:
• in jeder Pixelspalte der Leseknoten, der Leseknoten-Reinitialisierungstransistor und der als Spannungsfolger montierte Transistor vertikal von mindestens zwei in der Spalte aufeinanderfolgenden Pixeln geteilt werden,
• der erste und zweite Reinitialisierungstransistor (T1, T2) und der zweite Transfertransistor (TB) jeweils durch ein jeweiliges Steuersignal (Rst1<i>, Rst2<i>,TR_{B}<i,i+1>), das allen Pixeln derselben Zeile gemeinsam ist, angesteuert werden und der erste Transfertransistor (TA) von einem Steuersignal (TR_{A}<j>) gesteuert wird, das allen Pixeln derselben Pixelspalte gemeinsam ist; und
wobei der Sensor ebenfalls einen Controller (2) umfasst, der ausgelegt ist, um die Transistoren der Pixel, die Leseschaltung und die numerische Verarbeitungseinheit zu steuern, um eine Global-Shutter-Bildaufnahme im hochdynamischen Modus zu steuern, aufweisend:
• eine Integrationsphase mit globaler Obturation, umfassend
- eine globale Exposition der Pixel der ungeraden Spalten während einer ersten Integrationsdauer (TL), die nach einer globalen Reinitialisierung der Fotodioden der Matrix beginnt und die für alle Pixel der ungeraden Spalten gleichzeitig endet, mit einem ersten globalen Transfer (GTRA-L) von Ladungen der Fotodioden zum Speicherknoten der Pixel; und
- eine globale Exposition der Pixel der geraden Spalten während einer zweiten Integrationsdauer (TS), die sich von der ersten unterscheidet, die nach einer globalen Reinitialisierung der Fotodioden der Matrix beginnt und die für alle Pixel der geraden Spalten gleichzeitig endet, mit einem ersten globalen Transfer (GTRA-S) von Ladungen der Fotodioden zum Speicherknoten (MN) der Pixel, und dann
• eine sequentielle Lesephase, je Zeilenpaar (LP_{i,i+1}), wobei die Pixel eines Zeilenpaars, die sich in derselben Spalte (Cⱼ) befinden, zu zweit ein vertikales Pixelpaar mit geteiltem Leseknoten (SN) bilden und die Lesephase derart ist, dass eine Lesesequenz eines Zeilenpaars für jedes vertikale Pixelpaar (PP_{(i,i+1)j}) die Schritte umfasst:
- Ermitteln eines ersten numerischen Werts (Vᵣ) durch die Leseschaltung (2), der eine Messung der analogen Summe der Ladungen ist, die von jedem der Pixel des vertikalen Pixelpaars während der Expositionsdauer der jeweiligen Spalte integriert werden, dann
- Ermitteln eines zweiten numerischen Werts (Vᵢᵣ) entsprechend der anderen Expositionsdauer durch horizontale Interpolation (F_{IH}) durch den numerischen Verarbeitungsblock (4) von ersten numerischen Werten, ermittelt in der Lesesequenz des laufenden Zeilenpaars, für mindestens zwei vertikale Pixelpaare in benachbarten Spalten beiderseits der Spalte des betrachteten vertikalen Pixelpaars, wobei die benachbarten Spalten der anderen Expositionsdauer zugeordnet sind, und
- Ermitteln eines hochdynamischen Ausgangswerts (V_{HDR}) für das vertikale Pixelpaar ausgehend von dem ersten gelesenen numerischen Wert und dem zweiten interpolierten numerischen Wert durch Vergleich mit mindestens einem ersten Grenzwert (V_{SAT}).

2. Bildsensor nach Anspruch 1, wobei der numerische Verarbeitungsblock (4) ausgelegt ist, um eine zusätzliche Operation (V_{HDR}-C) horizontaler Gruppierung von Daten in jedem Zeilenpaar anzuwenden, um einen hochdynamischen Bilddatenstrom am Ausgang des Sensors zu bilden, wobei die zusätzliche Operation für jedes Zeilenpaar einen hochdynamischen Ausgangswert je Block aus zwei aufeinanderfolgenden vertikalen Pixelpaaren des Zeilenpaars ermittelt, wobei der hochdynamische Wert auf einer numerischen Addition der beiden hochdynamischen Werte der beiden vertikalen Pixelpaare des Blocks basiert.

3. Bildsensor nach Anspruch 1 oder 2, wobei der numerische Verarbeitungsblock (4) ausgelegt ist, um den hochdynamischen Wert jedes vertikalen Pixelpaars durch Vergleich mit einem ersten Grenzwert (V_{SAT}) zu ermitteln, so dass
• wenn der numerische Wert (VL) von dem ersten und zweiten numerischen Wert, der der längsten Expositionsdauer entspricht, kleiner als der erste Grenzwert ist, dies der numerische Wert ist, der verwendet wird, um den hochdynamischen Ausgangswert (V_{HDR}) zu ermitteln,
• andernfalls wird der andere numerische Wert (VS), der der kürzesten Expositionsdauer entspricht, verwendet, um den hochdynamischen Ausgangswert zu ermitteln.

4. Bildsensor nach Anspruch 1 oder 2, wobei der numerische Verarbeitungsblock (4) ausgelegt ist, um den hochdynamischen Wert jedes vertikalen Pixelpaars durch Vergleich mit einem ersten Grenzwert (V_{N}) und einem zweiten Grenzwert (V_{SAT}) zu ermitteln, so dass
• wenn der numerische Wert (VL) von dem ersten und zweiten numerischen Wert, der der längsten Dauer entspricht, kleiner als der erste Grenzwert ist, dies der Wert ist, der verwendet wird, um den hochdynamischen Ausgangswert zu ermitteln,
• wenn der numerische Wert (VL) zwischen dem ersten und dem zweiten Grenzwert liegt, ist der zur Ermittlung des hochdynamischen Ausgangswerts verwendete numerische Wert der erste numerische Wert (Vr),
• wenn der numerische Wert (VL) größer als der zweite Grenzwert ist, ist der zur Ermittlung des hochdynamischen Ausgangswerts verwendete numerische Wert der, der der kürzesten Expositionsdauer (VS) entspricht.

5. Bildsensor nach einem der Ansprüche 1 bis 4, wobei der numerische Verarbeitungsblock ausgelegt ist, um den hochdynamischen Ausgangswert jedes Paares auf einer Skala zu ermitteln, die der längsten Expositionsdauer zugeordnet ist, so dass, wenn der zur Ermittlung des hochdynamischen numerischen Werts des betrachteten Pixelpaares verwendete numerische Wert der kürzesten Expositionsdauer entspricht, der Wert mit dem Verhältnis der längeren Expositionsdauer zu der kürzeren Expositionsdauer multipliziert wird.

6. Bildsensor nach Anspruch 5, wobei das Verhältnis eine Ganzzahl ist, die eine Zweierpotenz ist.

7. Bildsensor nach Anspruch 6, wobei der numerische Verarbeitungsblock (4) eine Kompression (LUT) auf die hochdynamischen Werte anwendet, wenn das Verhältnis zwischen den beiden Expositionsdauern derart ist, dass die Tiefe in Bitanzahl der hochdynamischen Werte ein Ausgabeformat der Daten des Sensors überschreitet.

8. Bildsensor nach einem der Ansprüche 1 bis 7, aufweisend ein Farbfilternetz, so dass die zwei Pixel jedes vertikalen Pixelpaars derselben Farbfilterfarbe zugeordnet sind.

9. Bildsensor nach Anspruch 8, der ein Farbmakropixel (M-Pix) definiert, das eine Einheit aus 4 Blöcken mit 2x2 Pixeln ist, die 4 Zeilen und 4 Spalten abdecken, die aufeinanderfolgen, wobei jeder Block zwei vertikale Pixelpaare bildet, und das Makropixel einem periodischen Muster von 4 Farbfiltern mit einem Block je Filterfarbe des Musters zugeordnet ist.

10. Bildsensor nach einem der Ansprüche 1 bis 9, wobei der Controller (2) ausgelegt ist, um eine einzige globale Reinitialisierung von Fotodioden zu steuern, die den Beginn der ersten und zweiten Expositionsdauer festlegt, und die globalen Expositionen der geraden und ungeraden Spalten für alle Pixel gleichzeitig beginnen.

11. Bildsensor nach einem der Ansprüche 1 bis 9, wobei der Controller ausgelegt ist, um eine erste globales Reinitialisierung (GR) der Fotodioden, die den Beginn der ersten Integrationsdauer festlegt, dann, nach dem Ende der ersten Integrationsdauer, eine zweite globale Reinitialisierung (GR) von Fotodioden, die den Beginn der zweiten Integrationsdauer festlegt, zu befehlen.

12. Bildsensor nach einem der vorhergehenden Ansprüche, wobei jede Integrationsphase nach der globalen Reinitialisierung der Fotodioden eine globale Reinitialisierung der Leseknoten und während der globalen Reinitialisierung der Leseknoten eine globale Reinitialisierung der Speicherknoten über die globale Aktivierung der zweiten Transfertransistoren umfasst.

13. Bildsensor nach einem der vorhergehenden Ansprüche, wobei die Leseauswahl für ein Zeilenpaar durch den zweiten Pixel-Reinitialisierungstransistor (T2) erhalten wird, wobei der Controller ausgelegt ist, um den Transistor übereinstimmend mit einer selektiven Umschaltung eines Reinitialisierungsspannungsimpulses auf einer Polarisierungselektrode des Transistors selektiv zu aktivieren.

## Claims

1. Active-pixel image sensor comprising:
- a matrix (1) of pixels arranged in rows (rᵢ) and columns (cⱼ), where the rows (Rᵢ) define a horizontal alignment of pixels and the columns (Cⱼ) define a vertical alignment of pixels;
- a readout circuit (3) comprising a separate readout channel (rcⱼ) for each column of pixels (Cⱼ) and designed to establish, by analog-to-digital conversion, a digital value representative of the quantity of charges integrated by a pixel during an exposure time of the pixel, and to successively output, for each row of the matrix, said digital values established in each readout channel;
- a digital processing unit (4) designed to apply digital processing to said digital values output by the readout circuit; and
the structure of the pixels being such that each pixel includes:
• a photodiode (PHD), a memory node (MN) and a readout node (SN), and
• a first photodiode reset transistor (T1) designed to selectively reset the photodiode,
• a second readout-node reset transistor (T2) designed to selectively reset the readout node,
• a first transfer transistor (TA) for selectively allowing the electric charges integrated by the photodiode to be transferred into the memory node (MN),
• a second transfer transistor (TB) for selectively allowing of the charges stored in the memory node (MN) to be transferred into the readout node (SN),
• a transistor (TF) mounted as a voltage follower and designed to selectively apply voltage to the terminals of the readout node (SN) on the readout channel (rcᵢ) of the column of the pixel when the row of the pixel is selected for readout,
**characterized in that**:
• in each column of pixels, the readout node, the readout-node reset transistor and the transistor mounted as a voltage follower are shared vertically by at least two successive pixels in the column,
• the first and the second reset transistor (T1, T2) and the second transfer transistor (TB) are each driven by a particular control signal (Rst1<i>, Rst2<i>, TR_{B}<i,i+1>) common to all the pixels of the same row, and the first transfer transistor (TA) is driven by a control signal (TRA<j>) common to all the pixels of the same column of pixels; and
the sensor also including a controller (2) designed to drive the transistors of the pixels, the readout circuit and the digital processing unit in order to control a global shutter image capture in high dynamic mode, comprising:
• a global shutter integration phase, including
- global exposure of the pixels of the odd columns during a first integration time (TL) which begins after a global reset of the photodiodes of the matrix, and which ends simultaneously for all the pixels of the odd columns, with a first global transfer (GTR_{A-L}) of charges from the photodiodes to the memory node of said pixels; and
- global exposure of the pixels of the even columns during a second integration time (TS) which is different from the first and which begins after a global reset of the photodiodes in the matrix, and ends simultaneously for all the pixels of the even columns, with a first global transfer (GTR_{A-S}) of charges from the photodiode to the memory node (MN) of said pixels, and then
• a sequential readout phase, for each pair of rows (LP_{i,i+1}), the pixels of a pair of rows located in the same column (Cⱼ) forming, two by two, a vertical pair of pixels having a shared readout node (SN), and said readout phase is such that a readout sequence of a pair of rows includes, for each vertical pair of pixels (PP_{(i,i+1)j}), the steps of:
- establishing, by means of the readout circuit (2), a first digital value (Vᵣ) which is a measure of the analog sum of the charges integrated by each of the pixels of said vertical pair of pixels during the exposure time of the particular column, then
- establishing a second digital value (Vᵢᵣ) corresponding to the other exposure time, by horizontal interpolation (F_{IH}), by means of the digital processing unit (4), of first digital values established in the readout sequence of the current pair of rows, for at least two vertical pairs of pixels in neighboring columns, on both sides of the column of the vertical pair of pixels in consideration, where said neighboring columns are associated with said other exposure time, and
- establishing a high dynamic output value (V_{HDR}) for said vertical pair of pixels from said read-out first digital value and said interpolated second digital value, by comparison with at least a first threshold (V_{SAT}).

2. Image sensor according to claim 1, wherein the digital processing unit (4) is designed to apply an additional operation (V_{HDR}-C) of horizontal grouping of data in each pair of rows to form a stream of high dynamic image data at the output of the sensor, said additional operation establishing, for each pair of rows, a high dynamic output value per tile of two successive vertical pairs of pixels of the pair of rows, said high dynamic value being based on a digital addition of the two high dynamic values of the two vertical pixel pairs of the tile.

3. Image sensor according to either claim 1 or claim 2, wherein the digital processing unit (4) is designed to establish the high dynamic value of each vertical pair of pixels by comparison with a first threshold (V_{SAT}) such that
• if the digital value (VL) of said first and second digital values which corresponds to the longest exposure time is less than the first threshold, this is the digital value used to establish the high dynamic output value (V_{HDR}),
• otherwise, the other digital value (VS) which corresponds to the shorter exposure time is used to establish the high dynamic output value.

4. Image sensor according to either claim 1 or claim 2, wherein the digital processing unit (4) is designed to establish the high dynamic value of each vertical pair of pixels by comparison with a first threshold (V_{N}) and a second threshold (V_{SAT}), such that
• if the digital value (VL) of said first and second digital values which corresponds to the longest duration is less than the first threshold, this is the value used to establish the high dynamic output value,
• if said digital value (VL) is between the first and the second threshold, the digital value used to establish the high dynamic output value is the first digital value (Vr),
• if said digital value (VL) is greater than the second threshold, the digital value used to establish the high dynamic output value is that which corresponds to the shortest exposure time (VS).

5. Image sensor according to any of claims 1 to 4, wherein the digital processing unit is designed to establish the high dynamic output value of each pair in a scale which is the scale associated with the longest exposure time, such that when the digital value used to establish the high dynamic digital value of the pair of pixels in consideration corresponds to the shortest exposure time, said value is multiplied by the ratio of the longer exposure time to the shorter exposure time.

6. Image sensor according to claim 5, wherein said ratio is an integer which is a power of two.

7. Image sensor according to claim 6, wherein the digital processing unit (4) applies compression (LUT) to said high dynamic values when the ratio between the two exposure times is such that the depth in number of bits of the high dynamic values exceeds an output format of the data from the sensor.

8. Image sensor according to any of claims 1 to 7, comprising an array of color filters, such that the two pixels of each vertical pair of pixels are associated with the same color of colored filter.

9. Image sensor according to claim 8, defining a color macro-pixel (M-Pix) which is a block of 4 tiles of 2x2 pixels, covering 4 consecutive rows and 4 consecutive columns, each tile forming two vertical pairs of pixels, and said macro-pixel being associated with a periodic pattern of 4 colored filters, with one tile per filter color of the pattern.

10. Image sensor according to any of claims 1 to 9, wherein the controller (2) is designed to drive a single global reset of photodiodes, setting the start of said first and said second exposure time, and said global exposures of the even and odd columns start at the same time for all pixels.

11. Image sensor according to any of claims 1 to 9, wherein the controller is designed to control a first global reset (GR) of the photodiodes, setting the start of said first integration time, then, after the end of said first integration time, a second global reset (GR) of photodiodes, setting the start of said second integration time.

12. Image sensor according to any of the preceding claims, wherein each integration phase includes, after said global reset of the photodiodes, a global reset of the readout nodes, and, during the time of said global reset of the readout nodes, a global reset of the memory nodes via global activation of the second transfer transistors.

13. Image sensor according to any of the preceding claims, wherein the selection for readout for a pair of rows is obtained by the second reset transistor (T2) of the pixels, the controller being designed to selectively activate said transistor in accordance with selective switching of a reset voltage pulse on a bias electrode of said transistor.
